# EUROPEAN PATENT APPLICATION

(11) **EP 1 486 547 A2**
(43) Date of publication of application: **15.12.2004**
(21) Application number: 04013888.5
(22) Date of filing: 14.06.2004
(51) Int. Cl.: C09J 133/02, C09J 103/00, D04H 1/64, C03C 25/28, C03C 25/40

(54) **Fiberglass nonwoven binder**

(30) Priority: 12.06.2003 US 478132 P; 03.06.2004 US 860103 P
(71) Applicant: National Starch and Chemical Investment Holding Corporation, New Castle, Delaware 19720 (US)
(72) Inventor: Rodrigues, Klein A., Signal Mountain, Tennessee 37377 (US); Solarek, Daniel B., Hillsborough New Jersey 08844-1405 (US)
(74) Representative: Held, Stephan, Dipl.-Chem. Dr.rer.nat.

(57) **Abstract**

A fiberglass non-woven binder composition containing a carboxy-functional copolymer binder crosslinker and a compound capable of forming a hydrogen-bonding complex with the carboxy-functional copolymer binder. The binder composition provides a strong, yet flexible bond that allows a compressed fiberglass mat to easily expand once the compression is released. The binder composition is capable of being cured at lower cure temperatures than those binders prepared using conventional crosslinkers.

## Description

The present invention is directed towards binder compositions. More particularly, the present invention is directed towards fiberglass non-woven binder compositions having at least one carboxy-functional copolymer binder crosslinker and at least one compound capable of forming a hydrogen-bonding complex with the carboxy-functional copolymer binder.

Fiberglass insulation products are generally formed by bonding glass fibers together with a polymeric binder. Typically, an aqueous polymer binder is sprayed onto matted glass fibers soon after they have been formed and while they are still hot. The polymer binder tends to accumulate at the junctions where fibers cross each other, thereby holding the fibers together at these points. Heat from the hot fibers vaporizes most of the water in the binder. The fiberglass binder must be flexible so that the final fiberglass product can be compressed for packaging and shipping and later recover to its full vertical dimension when installed.

Phenol-formaldehyde binders have been the primary polymeric binders used in the past in manufacturing fiberglass insulation. These binders are low-cost, easy to apply and readily cured. They provide a strong bond while maintaining elasticity and good thickness recovery so that full insulating value is obtained. Still, phenol-formaldehyde binders release significant levels of formaldehyde into the environment during manufacture and therefore constitute an environmental and health risk. Once cured, the resin can continue to release formaldehyde in use, especially when exposed to acidic conditions.

As formaldehyde exposure can create adverse health effects in animals and humans, fiberglass binders have been developed that provide reduced emissions of formaldehyde. These developments include a mixture of phenol formaldehyde binders with carboxylic acid polymer binders. Still, formaldehyde emissions remain a concern.

Other formaldehyde-free binder systems have been developed using alternative chemistries. These alternative chemistries have considered three different parts. The first part is a polymer that can be copolymerized with other ethylenically unsaturated monomers, *e.g.*, a polycarboxyl, polyacid, polyacrylic, or anhydride. The second part is a crosslinker that includes an active hydrogen compound such as trihydric alcohol, triethanolamine, beta-hydroxy alkyl amides or hydroxy alkyl urea. The final part considered for providing a formaldehyde-free binder system is a catalyst or accelerator such as a phosphorous containing compound or a fluoroborate compound.

These alternative binder compositions work well; however, a deficiency of the current cross-linker systems is that they require relatively high temperatures to first drive off the water and then chemically convert the raw materials to a crosslinked gel. Temperatures needed to drive this esterification reaction can range from about 200°C to about 250°C. Accordingly, there is a need for a fiberglass binder composition that cures at lower temperatures. Further, there is a need for alternative fiberglass binder systems that provide the performance advantages of phenol-formaldehyde resins in formaldehyde-free systems.

Polysaccharides such as starch have also been used in binder systems. These polysaccharides form hydrogen bonding complexes with polyacrylic acid, as well as with themselves. Additionally, these materials can be crosslinked by chemistries known in the art. However, these materials tend to have high molecular weights, which can lead to clumping and sticking of the glass fibers during processing. As a consequence of this clumping and sticking of the fibers, insulation is produced that can be unfit for commercial use. Accordingly, there is a need for a hydrogen bonding complex that does not have the disadvantages of the above mentioned polysaccharides.

The binder composition of the present invention provides a strong, yet flexible bond allowing a compressed fiberglass mat to easily expand once compression is released. This binder composition can be a fiberglass non-woven binder composition having at least one carboxy-functional copolymer binder crosslinker and at least one compound capable of forming a hydrogen-bonding complex with the carboxy-functional copolymer binder. In this manner the binder composition is capable of being cured at lower cure temperatures than with conventional crosslinkers.

The binder composition can be in the form of an aqueous solution having a polymeric binder and at least one compound capable of forming a hydrogen-bonding complex with the binder. The polymeric binder includes from about 30 to about 100 percent by weight of one or more acid functional monomer units.

The binder composition further includes at least one compound capable of forming a hydrogen-bonding complex with the carboxy-functional copolymer binder. In one aspect these hydrogen-bonding complex-forming compounds include polysaccharides. It is desirable that the polysaccharides be of low molecular weight so that they form low viscosity solutions, thereby avoiding the problems detailed above. These polysaccharides have an additional benefit in that they are able to form hydrogen-bonding complexes with themselves. Further, the polysaccharides can crosslink with themselves using techniques well known in the art.

In one aspect, the polysaccharides are starches having water fluidity ('WF') of about 20 to about 90 can be used as part of the fiberglass binder. (A description of water fluidity can be found in U.S. Patent No. 4,499,116.) In another aspect, starches having WF of about 50 to about 90 can be used. In a third aspect, starches having WF of about 70 to about 90 can be used. In addition, low molecular weight starch derivatives such as dextrins, maltodextrins, com syrups and combinations thereof can also be used.

According to the invention lower temperature curing can be obtained by using a crosslinker containing a compound capable of forming a hydrogen-bonding complex with the carboxy-functional copolymer binder. This hydrogen-bonding complex forms crosslinks without chemical reaction and therefore can be cured at lower temperatures, *e.g.*, about 150°C. This results in both energy and time saving during the manufacturing process.

Conventional fiberglass binder systems using triethanol amine compounds are hygroscopic and tend to adsorb moisture in the end-use application. In contrast, by using the hydrogen-bonding complex according to the present invention, the novel binder composition overcomes this major problem.

The present invention is also directed towards a bonded fiberglass mat bonded with a polymer binder composition containing an acid-functional polymer binder and a compound capable of forming a hydrogen-bonding complex with the polymer.

The present invention provides a non-woven binder composition having a carboxy-functional polymer and a compound capable of forming hydrogen-bonding complexes with that polymer. The carboxy-functional polymer can be synthesized from one or more carboxylic acid monomers. In one embodiment, the acid monomer makes up from about 30 to about 100 mole percent of the carboxyl polymer. In another embodiment, the acid monomer makes up from about 50 to about 95 mole percent of the carboxyl polymer. In an additional embodiment, the acid monomer makes up from about 60 to about 90 mole percent of the carboxyl polymer.

Examples of carboxylic acid monomers useful in forming the polymer of the invention include acrylic acid, methacrylic acid, crotonic acid, isocrotonic acid, fumaric acid, maleic acid, cinnamic acid, 2-methyl maleic acid, itaconic acid, 2-methy itaconic acid, sorbic acid, α-β-methylene glutaric acid, maleic anhydride, itaconic anhydride, acrylic anhydride, methacrylic anhydride. In one aspect, the acid monomer used in synthesizing the polymer is maleic acid, acrylic acid, methacrylic acid or a mixture thereof. The carboxyl groups can also be formed *in situ*, such as isopropyl esters of acrylates and methacrylates that form acids by hydrolysis of the esters when the isopropyl group leaves. The carboxylic acid monomer also includes anhydrides that form carboxyl groups *in situ,*

Other ethylenically unsaturated monomers can also be used in forming the carboxyl polymer at a level of up to about 70 weight percent based on total monomer. In another aspect, these ethylenically unsaturated monomers can be used at a level of about 0.1 to about 50 weight percent. These monomers can be used to obtain desirable properties of the copolymer in ways known in the art. For example, hydrophobic monomers can be used to increase the water-resistance of the non-woven.

Monomers can also be use to adjust the glass transition temperature ('T_{g}') of the carboxyl polymer to meet end-use application requirements. Useful monomers include but are not limited to (meth)acrylates, maleates, (meth)acrylamides, vinyl esters, itaconates, styrenics, acrylonitrile, nitrogen functional monomers, vinyl esters, alcohol functional monomers, and unsaturated hydrocarbons.

Low levels of up to a few percent (*e.g.*, up to about 2 weight % based on total monomer) of crosslinking monomers can also be used in forming the carboxyl polymer. This extra crosslinking improves the strength of the bonding. However, at higher levels this can negatively affect the flexibility of the resultant material. The crosslinking moieties can be latent crosslinkers. By 'latent crosslinkers' it is meant that the crosslinking reaction takes place not during polymerization, but during curing of the binder.

Chain-transfer agents known in the art can also be used for regulating chain length and molecular weight. The chain transfer agents can be multifunctional whereby star-type polymers can be produced.

The carboxyl polymer can also be co-synthesized with one or more substituted amide, silanol, or amine oxide functional-monomers for improved glass adhesion. These functional monomers are used at a level of from about 0 to about 10 percent by weight based on the total monomer. In another aspect the functional monomers are used at a level of from about 0.01 to about 10 percent. In one aspect the functional monomers are used at a level of from about 0.1 to about 5 percent. Examples of substituted amide monomers include, but are not limited to N-methylol acrylamide, N-ethanol acrylamide, N-propanol acrylamide, N-methylol methacrylamide, N,N-dimethyl acrylamide, N,N-diethyl acrylamide, N-isopropyl acrylamide, N-hydroxyethyl acrylamide, N-hydroxypropyl acrylamide, N-octyl acrylamide, N-lauryl acrylamide and dimethyl aminopropyl (meth)acrylamide. In one aspect the substituted amide is di-substituted, *e.g.,* N,N-dimethyl acrylamide and N,N-diethyl acrylamide.

Examples of silanol monomers include vinyl trisisopropoxy silane, vinyl trisethoxy silane, vinyl trismethoxy silane, vinyl tris(2-methoxyethoxy) silane, vinyl methyl dimethoxy silane, γ-methacryl oxypropyl trimethoxysilane and vinyl triacetoxy silane. These monomers are typically copolymerized with acrylic acid in water. They hydrolyze *in situ* to form the silanol linkages and liberate the corresponding alcohol, which can then be distilled off.

The amine oxide monomers are typically incorporated by copolymerizing an amine-containing monomer, *e.g.,* 2-vinyl pyridine, 4-vinyl pyridine, dimethyl aminoethyl methacrylate, and then oxidizing the amine functionality to the amine oxide. The amine can also be oxidized to amine oxide prior to polymerization.

Similarly, the substituted amide and silanol functionalities can be introduced into the carboxyl polymer by other means. For example, the silanol functionality can be incorporated by using a chain transfer agent such as γ-mercaptopropyl trimethoxy silane. Also, a polymer containing acrylamide groups can be functionalized, for example, with dimethyl amine to give a substituted amide derivative. Copolymers of amino acids, such as a copolymer of aspartic acid and sodium aspartate as disclosed in U.S. Patent Number 5,981,691, are useful. These polymers contain amide functionality in the backbone (*e.g.*, Reactin AS 11 from Folia, Inc., Birmingham, Alabama). Furthermore, these copolymers have imide functionality, This imide functionality can be reacted with an amine reagent such as di-ethanol amine to form a polymer with amide side chains.

A carboxyl polymer can further be formed from the hydroxyl group of amine monomers as described in U.S. Patent Publication Number 2004/0082240. These amine monomers provide an internal crosslinker and partially or fully eliminate the need for additional crosslinker. The binder composition can also be formulated with crosslinker(s) typically used in fiberglass binder compositions, such as hydroxyl, polyol, or amine components. Useful hydroxyl compounds include, but are not limited to, trihydric alcohol; β-hydroxy alkyl amides; polyols, especially those having molecular weights of less than 10,000; ethanol amines such as triethanol amine; hydroxy alkyl urea; and oxazolidone. Useful amines include triethanol amine, diethylene triamine, tetratethylene pentamme, and polyethylene imine. In addition to providing additional crosslinking, the polyol or amine also serves in plasticizing the polymer film.

The carboxyl polymer can be synthesized by known polymerization methods such as solution, emulsion, suspension and inverse emulsion polymerization methods. In one embodiment, the polymer is formed by solution polymerization in an aqueous medium. The aqueous medium can be water or a mixed water/water-miscible solvent system such as a water/alcohol solution. The polymerization can be batch, semi-batch, or continuous. The polymers are typically prepared by free radical polymerization; however, condensation polymerization can also be used to produce a polymer containing the desired moieties. The monomers can be added to the initial charge, added on a delayed basis, or a combination.

In one embodiment, the carboxyl polymer is formed at a solids level in the range of about 15 to about 60 percent. In another embodiment, the polymer is formed at a solids level in the range of about 25 to about 50 percent,

In one embodiment, the carboxyl polymer can have a pH in the range of from about 1 to about 5. In another embodiment, the polymer can have a pH in the range of about 2 to about 4. Preferably, the pH is greater than 2 for the hazard classification it will be afforded.

The carboxyl polymer can be partially neutralized, which is commonly done with sodium, potassium, or ammonium hydroxides. However, it is not necessary to neutralize the carboxyl polymer. The choice of base and the partial-salt formed affects the glass transition temperature ('T_{g}') of the copolymer. The use of calcium or magnesium base for neutralization produces partial salts having unique solubility characteristics, making them quite useful depending on end-use application.

The carboxyl polymer may be random, block, star, or other known polymer architecture. Random polymers are preferred due to the economic advantages; however other architectures could be useful in certain end-uses. Copolymers useful as fiberglass binders have weight average molecular weights in the range of about 1,000 to about 300,000. In one aspect, the weight average molecular weight of the copolymer is in the range of about 2,000 to about 15,000. In another aspect, the weight average molecular weight of the copolymer is in the range of about 2,500 to about 10,000. In one aspect, the weight average molecular weight of the copolymer is in the range of about 3,000 to about 6,000.

The binder composition of the invention also contains compounds capable of forming hydrogen bonding complexes with the carboxyl polymer. This allows for crosslinking at lower temperatures. These crosslinking compounds can be used in conjunction with the functional copolymers of the present invention, but are also used with polymer and copolymers currently used as fiberglass binders. They can also be used in combination with the conventional crosslinking compounds listed previously, Examples of hydrogen-bonding complexing agents include, but are not limited to polyalkylene glycol, polyvinyl pyrrolidone, polysaccharides, polyethylene amine, or mixtures thereof. In one embodiment the polyalkylene glycol is polyethylene glycol.

Polysaccharides that can be useful in the present invention can be derived from plant, animal and microbial sources. Examples of such polysaccharides include starch, cellulose, gums (*e.g*., gum arabic, guar and xanthan), alginates, pectin and gellan. Starches include those derived from maize and conventional hybrids of maize, such as waxy maize and high amylose (greater than 40% amylose) maize, potato, tapioca, wheat, rice, pea, sago, oat, barley, rye, amaranth including conventional hybrids or genetically engineered materials.

Also included are hemicellulose or plant cell wall polysaccharides such as D-xylans. Examples of plant cell wall polysaccharides include arabino-xylans such as com fiber gum, a component of corn fiber. An important feature of these polysaccharides is the abundance of hydroxyl groups. These hydroxyl groups provide sites for crosslinking. Some polysaccharides also contain other functionality such as carboxyl groups, which can be ionically crosslinked as well. Amylose containing starches can associate through hydrogen bonding or can complex with a wide variety of materials including polymers.

The polysaccharides can be modified or derivatized by etherification (*e.g*., via treatment with propylene oxide, ethylene oxide, 2,3-epoxypropyltrimethylammonium chloride), esterification (for example, via reaction with acetic anhydride, octenyl succinic anhydride ('OSA')), acid hydrolysis, dextrinization, oxidation or enzyme treatment (*e.g.*, starch modified with α-amylase, β-amylase, pullanase, isoamylase or glucoamylase), or various combinations of these treatments.

Other polysaccharides useful hydrogen-bonding materials include maltodextrins, which are polymers having D-glucose units linked primarily by α-1,4 bonds and have a dextrose equivalent ('DE') of less than about 20. Maltodextrins are available as a white powder or concentrated solution and are prepared by the partial hydrolysis of starch with acid and/or enzymes.

Polysaccharides have the additional advantage of forming hydrogen bonding complex(es) with themselves. Accordingly, the binder composition can include the polysaccharide(s) without the carboxyl polymer. This polysaccharide can be further crosslinked using crosslinking agents known in the art. Such crosslinking agents include but are not limited to phosphorus oxychloride, epichlorohydrin, sodium trimetaphosphate, or adipic-acetic anhydride.

The hydrogen-bonding complex to polymer binder weight ratio is from about 1:99 to about 99:1. In one aspect the hydrogen-bonding complex to polymer binder weight ratio is from about 1:20 to about 20:1. In another aspect the hydrogen-bonding complex to polymer binder weight ratio is from about 5:1 to about 1:5.

The binder composition can form strong bonds without the need for a catalyst or accelerator. One advantage of not using a catalyst in the binder composition is that catalysts tend to produce films that can discolor and/or release phosphorous-containing vapors. An accelerator or catalyst can be combined with the copolymer binder in order to decrease the cure time, increase the crosslinking density, and/or decrease the water sensitivity of the cured binder. Catalysts useful with the binder are known in the art, such as alkali metal salts of a phosphorous-containing organic acid, *e.g.,* sodium hypophosphate, sodium phosphite, potassium phosphite, disodium pyrophosphate, tetrasodium pyrophosphate, sodium tripolyphosphate, sodium hexametaphosphate, potassium polyphosphate, potassium tripolyphospate, sodium trimetaphosphate, sodium tetrametaphosphate; fluoroborates, and mixtures thereof. The catalyst could also be a Lewis acid, such as magnesium citrate or magnesium chloride; a Lewis base; or a free radical generator, such as a peroxide. The catalyst is present in the binder formulation at from 0 to 25 percent by weight, and more preferably from 1 to 10 percent by weight based on the copolymer binder.

The carboxyl polymer, compound capable of forming hydrogen-bonding, and optional catalyst are blended together to form a fiberglass binder composition.

The binder composition can optionally be formulated with one or more adjuvants such as coupling agents, dyes, pigments, oils, fillers, thermal stabilizers, emulsifiers, curing agents, wetting agents, biocides, plasticizers, anti-foaming agents, waxes, enzymes, surfactants, release agents, corrosion inhibitors, additives to minimize leaching of glass, flame-retarding agents, and lubricants. The adjuvants are generally added at levels of less than 20 percent based on the weight of the copolymer binder.

The polymer binder composition is useful for bonding fibrous substrates to form a formaldehyde-free non-woven material. The copolymer binder of the invention is especially useful as a binder for heat-resistant non-wovens, *e.g*., aramid fibers, ceramic fibers, metal fibers, polyrayon fibers, polyester fibers, carbon fibers, polyimide fibers, and mineral fibers such as glass fibers.

The copolymer binder composition is generally applied to a fiber glass mat as it is being formed by means of a suitable spray applicator. The spray applicator aids in distributing the binder solution evenly throughout the formed fiberglass mat. Solids are typically present in the aqueous solution in amounts of about 5 to 25 percent by weight of total solution. The binder may also be applied by other means known in the art, including, but not limited to, airless spray, air spray, padding, saturating, and roll coating.

Residual heat from the fibers volatizes water away from the binder. The resultant high-solids binder-coated fiberglass mat is allowed to expand vertically due to the resiliency of the glass fibers. The fiberglass mat is then heated to cure the binder. Typically, curing ovens operate at a temperature of from 130°C to 325°C. However, the binder composition of the present invention can be cured at lower temperatures of from about 110°C to about 150°C. In one aspect, the binder composition can be cured at about 120°C. The fiberglass mat is typically cured from about 5 seconds to about 15 minutes. In one aspect the fiberglass mat is cured from about 30 seconds to about 3 minutes. The cure temperature and cure time also depend on both the temperature and level of catalyst used. The fiberglass mat can then be compressed or rolled for shipping. An important property of the fiberglass mat is that it returns substantially to its full vertical height once the compression is removed. The copolymer binder produces a flexible film that allows the fiberglass insulation to bounce back when the roll is unwrapped and placed in walls and/or ceilings.

Fiberglass or other non-woven treated with the copolymer binder composition is useful as insulation for heat or sound in the form of rolls or batts; as a reinforcing mat for roofing and flooring products, ceiling tiles, flooring tiles, as a microglass-based substrate for printed circuit boards and battery separators; for filter stock and tape stock and for reinforcements in both non-cementatious and cementatious masonry coatings.

The following examples are presented to further illustrate and explain the present invention and should not be taken as limiting in any regard.

### EXAMPLE 1

The following formulations were mixed together to form insulation sizing resins. 50 grams of a 50% solids solution of polyacrylic acid was blended with 26 grams of 50% solutions of the listed crosslinker producing 76 grams of a 50% solids nonwoven binder composition. Curing was measured by qualitatively measuring the strength of the resulting film,

The testing protocol was as follows. 20 grams of each of solution was poured into PMP Petri dishes and placed overnight in a forced air oven set at 60°C. The film was then cured by being placed for 10 minutes in a forced air oven set at 150°C. After cooling, the cure of the resulting films was evaluated in terms of physical appearance, flexibility, and tensile strength.

**TABLE 1**

| Example | Amount of polyacrylic acid (50% solution) | co-ingredient | Amount of co-ingredient | Performance of insulation sizing resin |
|---|---|---|---|---|
| 1a | 50 | Triethanol amine (TEA) (comparative) | 13 | Control (cured at 220°C) |
| 1b | 50 | Polyethylene glycol 600 | 13 | Cured better compared to conventional resin in 1 a |
| 1c | 50 | Polyethylene glycol 5000 | 13 | Cured better compared to conventional resin in 1 a |
| 1d | 50 | Polyvinyl pyrrolidone | 10 | Cured better compared to conventional resin in 1a |
| 1e | 50 | Polyethylene imine | 10 | Cured better compared to conventional resin in 1 a |

While not being bound by any theory, it is believed that the resins in 1b to 1e form hydrogen bonding complexes. Hence, they cure at much lower temperatures than the conventional resin in 1a. This is because the conventional resin needs to undergo an esterification reaction between the polyacrylic acid and the TEA after all the water in the system is driven off. In contrast, after driving the water off in 1b to 1e, hydrogen-bonding complexes are formed, which lower energy costs and save processing time.

### EXAMPLE 2

Copolymer binders containing glass-adhesion promoting comonomers were synthesized as follows -

### EXAMPLE 2A

A reactor containing 200 grams of water and 244 grams of isopropanol was heated to 85°C. A monomer solution containing 295 grams of acrylic acid and 4.1 grams of N,N-dimethyl acrylamide was added to the reactor over a period of 3.0 hours, An initiator solution comprising 15 grams of sodium persulfate in 100 grams of deionized water was simultaneously added to the reactor over a period of 3.5 hours. The reaction product was held at 85°C for an additional hour. The isopropanol was then distilled using a Dean-Stark trap.

### EXAMPLE 2B

A reactor containing 200 grams of water and 244 grams of isopropanol was heated to 85°C. A monomer solution containing 295 grams of acrylic acid and 5 grams of vinyl trisisopropoxy silane (available as CoatOSil® 1706 from GE Silicones, Wilton, Connecticut) was added to the reactor over a period of 3.0 hours. An initiator solution comprising of 15 grams of sodium persulfate in 100 grams of deionized water was simultaneously added to the reactor over a period of 3.5 hours. The reaction product was held at 85°C for an additional hour. The isopropanol was then distilled using a Dean-Stark trap. The isopropoxy silane is attached to the copolymer via the vinyl linkage. However, it hydrolyzes during the reaction forming silanol groups and isopropanol. The isopropanol formed is distilled with the rest of the isopropanol added to the initial charge. Additional water is added to the reaction to dilute it to 50% solids.

### EXAMPLE 2C

A reactor containing 200 grams of water and 244 grams of isopropanol was heated to 85°C. A monomer solution containing 295 grams of acrylic acid and 5 grams of vinyl triethoxy silane (available as Silquest® A-151 from GE Silicones, Wilton, Connecticut) was added to the reactor over a period of 3.0 hours. An initiator solution comprising of 15 grams of sodium persulfate in 100 grams of deionized water was simultaneously added to the reactor over a period of 3.5 hours. The reaction product was held at 85°C for an additional hour. The isopropanol was then distilled using a Dean-Stark trap. The isopropoxy silane is attached to the copolymer via the vinyl linkage. However, it hydrolyzes during the reaction to form silanol groups and ethanol. The ethanol formed is distilled with the rest of the isopropanol added to the initial charge. Additional water is added to the reaction to dilute it to 50 percent solids.

### EXAMPLE 2D

A reactor containing 200 grams of water and 244 grams of isopropanol was heated to 85°C. A monomer solution containing 295 grams of acrylic acid and 5 grams of 4-vinyl pyridine was added to the reactor over a period of 3.0 hours. An initiator solution comprising of 15 grams of sodium persulfate in 100 grams of deionized water was simultaneously added to the reactor over a period of 3.5 hours. The reaction product was held at 85°C for an additional hour. The isopropanol was then distilled using a Dean-Stark trap. The vinyl pyridine moiety was then oxidized to amine oxide by treating the polymer with hydrogen peroxide in the presence of sodium molybdate.

### EXAMPLE 3

Solutions were prepared by dissolving 25 grams of a polyacrylic acid (available as Alcosperse® 602A from Alco Chemical, Chattanooga, Tennessee), and a low viscosity starch solution in the amount detailed in Table 2 below. The solutions were diluted to 10%, and the viscosities of these 10% starch-containing solutions were measured. As a comparison, the viscosity of a similar solution containing triethanol amine (a conventional crosslinker known in the art) was also measured.

**TABLE 2**

| Example | Crosslinking agent | Grams of crosslinking agent added to polyacrylic acid solution | Viscosity of a 10% fiberglass sizing solution (cps) | WF of starch |
|---|---|---|---|---|
| 3a | Triethanol amine | 4.3 | 18 | - |
| 3b | Acid converted waxy maize substituted with hydroxypropyl groups (30 % solids) | 26.9 | 19.7 | 85 |
| 3c | Acid converted waxy maize substituted with hydroxypropyl groups (50 % solids) | 16 | 19.6 | 85 |
| 3d | Acid converted waxy maize octenyl succinate / waxy maize dextrin blend (30% solids) | 26.8 | 18.6 | Blend of 40 WF starch and dextrin |
| 3e | Acid converted waxy maize octenyl succinate / waxy maize dextrin blend (50% solids) | 16 | 20.6 | Blend of 40 WF starch and dextrin |
| 3f | Acid converted waxy maize octenyl succinate (50% solids) | 16 | 20.0 | 85 |
| 3g | Beta amylase converted waxy maize octenyl succinate (50% solids) | 16 | 16.5 | 85 |
| 3h | Acid converted waxy maize substituted with hydroxypropyl groups (30 % solids) | 26.9 | 45.3 | 40 |
| 3i | Regular high molecular weight starch | 3 | 2000 | 5 |

The data indicate that the viscosities of the starch/polyacrylic acid solutions with water fluidities ('WF') from 40 to 85 are in the range of the viscosity of the conventional polyacrylic acid-triethanol amine system. However, a traditional unmodified starch has a very high viscosity and cannot be used in this system.

## Claims

1. A non-woven binder composition comprising:
a carboxyl polymer having one or more carboxylic acid functional monomer units in an amount of 30 to 100 percent by weight of the carboxyl polymer; and
at least one compound capable of forming hydrogen-bonding complexes with the carboxyl polymer.

2. The hydrogen-bonding complex forming compound of claim 1 further comprising polyalkylene glycol, polyvinyl pyrrolidone, polyethylene amine, or a mixture thereof.

3. The hydrogen-bonding complex forming compound of claim 1 further comprising one or more polysaccharides capable of forming hydrogen-bonding complexes with itself and/or other polysaccharides.

4. The one or more polysaccharides of claim 3 wherein the one or more polysaccharides is at least one starch having water fluidity ('WF') of 20 to 90.

5. The copolymer binder of claim 1 further comprising from 0 to 25 weight percent of at least one catalyst based on the weight of the carboxyl polymer.

6. The carboxyl polymer of claim 1 further comprising from 0.1 to 50 weight percent of ethylenically unsaturated monomers.

7. The carboxyl polymer of claim 1 further comprising from 0.01 to 10 weight percent of a monomer selected from the group consisting of substituted amide monomers, silanol monomers, or amine oxide monomers.

8. A fiberglass sizing composition comprising the non-woven binder composition of claim 1.

9. A binder composition comprising:
at least one polysaccharide capable of forming hydrogen-bonding complexes with itself.

10. The binder composition of claim 9 further comprising a crosslinker for crosslinking the polysaccharide.
